# FASCICULE DE BREVET EUROPEEN

(11) **EP 0 790 667 B1**
(45) Date de publication et mention de la délivrance du brevet: **12.09.2001**
(21) Numéro de dépôt: 97400251.1
(22) Date de dépôt: 05.02.1997
(51) Int. Cl.: H01Q 7/00, H01Q 1/22, G06K 19/077

(54) **Procédé de réalisation d'un objet portatif à antenne bobinée**
Verfahren zur Realisierung eines tragbaren Objektes mit einer Spulenantenne
Method for realisation of a portable object with a coil antenna

(30) Priorité: 13.02.1996 FR 9601760
(43) Date de publication de la demande: 20.08.1997
(73) Titulaire: SCHLUMBERGER Systèmes, 92120 Montrouge (FR)
(72) Inventeur: Catté, Etienne, 78560 Port-Marly (FR)
(74) Mandataire: Lemoyne, Didier

(56) Documents cités:
- EP-A- 0 549 832
- EP-A- 0 586 083
- DE-C- 4 441 122
- GB-A- 2 284 324

## Description

La présente invention concerne un procédé de réalisation d'un objet portatif en forme de carte et comportant au moins une antenne bobinée.

L'invention trouve une application particulièrement avantageuse dans le domaine de la fabrication d'objets portatifs à antenne comme par exemple les cartes sans contact, notamment les cartes sans contact au format ISO 7816.

Actuellement, la plupart des procédés utilisés pour réaliser des cartes à antenne bobinée consistent d'abord, à l'aide d'un outillage spécifique, à bobiner une antenne et à la préformer, puis à l'insérer dans un corps de carte dans lequel on aura préalablement aménagé une gorge apte à recevoir l'antenne ainsi bobinée. Ladite gorge peut, par exemple, être obtenue par laminage d'une feuille formant le fond de la gorge et sur laquelle sont disposés un cadre et un noyau formant les parois latérales de la gorge.

Toutefois, ces procédés connus présentent l'inconvénient d'exiger la mise en oeuvre de trois opérations successives coûteuses en temps et en main d'oeuvre. D'autre part, on peut remarquer que chaque gabarit d'antenne nécessite un outillage particulier.

Aussi, le problème technique à résoudre par l'objet de la présente invention est de proposer un procédé de fabrication d'un objet portatif en forme de carte et comportant au moins une antenne bobinée, procédé qui permettrait, par rapport aux procédés de l'état de la technique, de limiter le nombre d'opérations à effectuer et de simplifier les outillages.

La solution au problème technique posé consiste, selon la présente invention, en ce que ledit procédé comprend les étapes suivantes :
- réalisation d'un premier et d'un deuxième demi-corps de carte, ledit premier demi-corps de carte présentant un noyau au gabarit de ladite antenne.
- bobinage direct de l'antenne autour du noyau du premier demi-corps de carte,
- assemblage des deux demi-corps de carte.

Ainsi, le procédé de l'invention permet de réaliser l'antenne de l'objet portatif en une seule opération de bobinage sans qu'il soit nécessaire de la préformer ni de l'insérer dans une gorge. Il en résulte une réduction sensible de temps et de main-d'oeuvre. D'autre part, un avantage supplémentaire de l'invention réside dans le fait que le seul outillage à prévoir est une bobineuse universelle, utilisable quelque soit le gabarit de l'antenne, et sur laquelle le premier demi-corps de carte est monté directement en guise de mandrin.

D'une manière générale, l'antenne réalisée conformément au procédé de l'invention sera destinée à être couplée à un circuit imprimé portant les différents sous-ensembles nécessaires au fonctionnement de l'objet portatif, tels que composants électroniques, piles, etc.

C'est pourquoi l'invention prévoit que ledit procédé comprend également une étape de montage d'un circuit imprimé à l'intérieur d'une cavité aménagée dans le premier demi-corps de carte, chaque extrémité de l'antenne étant reliée à une plage de connexion dudit circuit imprimé.

Selon un premier mode de réalisation, le circuit imprimé est monté à l'intérieur de ladite cavité après bobinage, les extrémités de l'antenne étant reliées simultanément auxdites plages de connexion.

Selon un deuxième mode de réalisation, le circuit imprimé est monté à l'intérieur de ladite cavité avant bobinage, une première extrémité de l'antenne étant reliée à une première plage de connexion avant bobinage et une deuxième extrémité de l'antenne étant reliée à une deuxième plage de connexion après bobinage.

La description qui va suivre en regard des dessins annexés, donnés à titre d'exemples non limitatifs, fera bien comprendre en quoi consiste l'invention et comment elle peut être réalisée.

La figure 1 est une vue en perspective de deux demi-corps d'une carte destinée à recevoir une antenne réalisée conformément au procédé de l'invention.

La figure 2 est une vue de côté du premier demi-corps de la carte de la figure 1 montée sur une bobineuse.

La figure 3a est une vue de côté du premier demi-corps de carte de la figure 2 dans lequel est monté un circuit imprimé après bobinage de l'antenne.

La figure 3b est une vue de côté du premier demi-corps de carte de la figure 2 dans lequel est monté un circuit imprimé avant bobinage de l'antenne.

La figure 4 est une vue de côté d'une carte sans contact réalisée conformément à l'invention.

Les figures 5a et 5b sont respectivement une vue de dessus et une vue de côté d'une carte avec contact extérieur, réalisée conformément à l'invention.

La figure 6 est une vue de côté d'une carte à deux antennes réalisée conformément au procédé de l'invention.

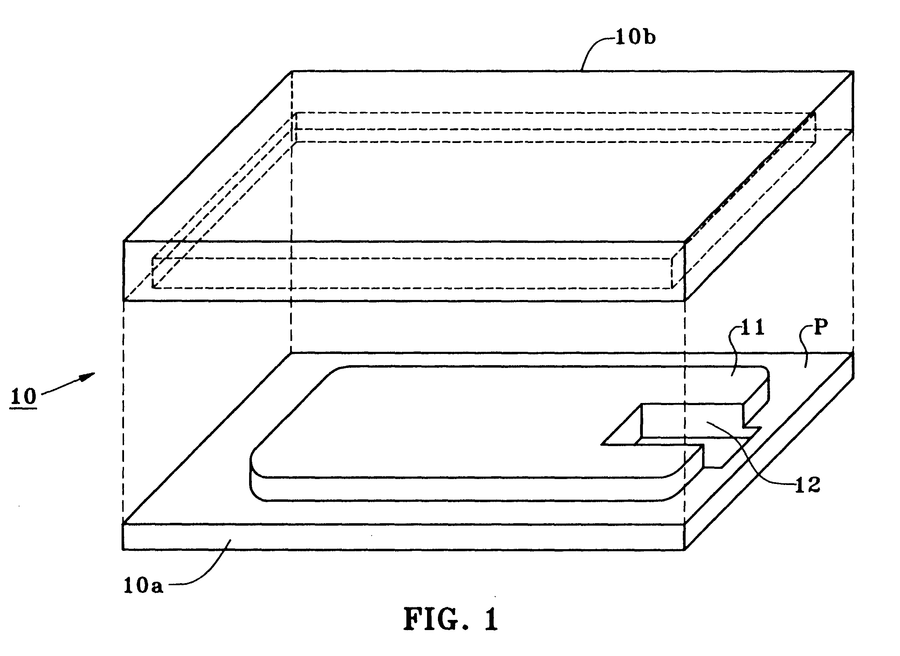

La figure 1 montre en perspective un objet portatif 10 en forme de carte destiné à recevoir une antenne bobinée. Cet objet portatif, que l'on appellera "carte" dans la suite de ce mémoire, est fabriqué selon un procédé qui consiste, dans une première étape, à réaliser, par moulage par exemple, un premier 10a et un deuxième 10b demi-corps de carte qui, lorsqu'ils sont assemblés, constituent une carte complète de forme sensiblement parallélipipédique.

Comme on peut le voir sur la figure 1, le premier demi-corps 10a de carte présente un noyau 11 faisant saillie par rapport au plan général P du demi-corps 10a. Ce noyau 11 est prévu au gabarit de l'antenne à réaliser, laquelle est obtenue par bobinage direct de l'antenne autour du noyau 11.

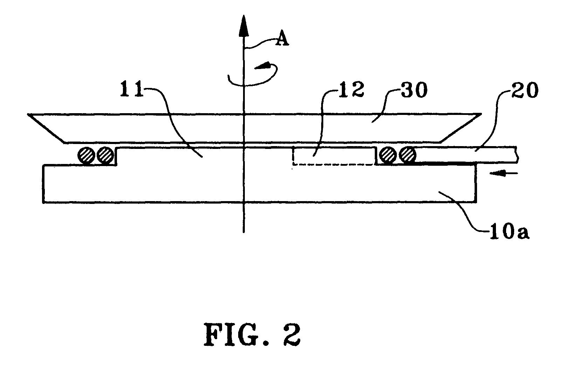

Plus précisément, ainsi que l'indique la figure 2, le premier demi-corps 10a de carte est monté directement sur une bobineuse, non représentée, et sert alors de mandrin. Un fil 20 est bobiné par entraînement autour du noyau 11 suite au mouvement de rotation autour de l'axe A du demi-corps 10a de carte. Le fil 20 peut être freiné lors du bobinage, d'une part pour obtenir une bonne tenue mécanique, et, d'autre part, pour compenser le fait que la vitesse linéaire de bobinage n'est pas constante car le noyau n'est généralement pas cylindrique. Enfin, un guide 30 peut être amené en contact avec le demi-corps 10a pour s'assurer que le fil 20 reste en contact avec le plan P pendant le bobinage.

Les objets portatifs concernés par l'invention seront le plus souvent des cartes dans lesquelles l'antenne doit être reliée à un circuit imprimé portant les divers sous-ensembles nécessaires au fonctionnement des cartes, à savoir les composants électroniques de traitement des signaux reçus via l'antenne ou l'élaboration des signaux à émettre également via ladite antenne et, éventuellement des piles d'alimentation.

A cet effet, une cavité 12, visible sur les figures 1 et 2, destinée à recevoir ledit circuit imprimé est aménagée dans le premier demi-corps 10a de carte d'une manière telle à permettre la liaison électrique entre chaque extrémité de l'antenne et une plage de connexion du circuit imprimé.

Le circuit imprimé peut être monté dans le premier demi-corps 10a après ou avant le bobinage de l'antenne.

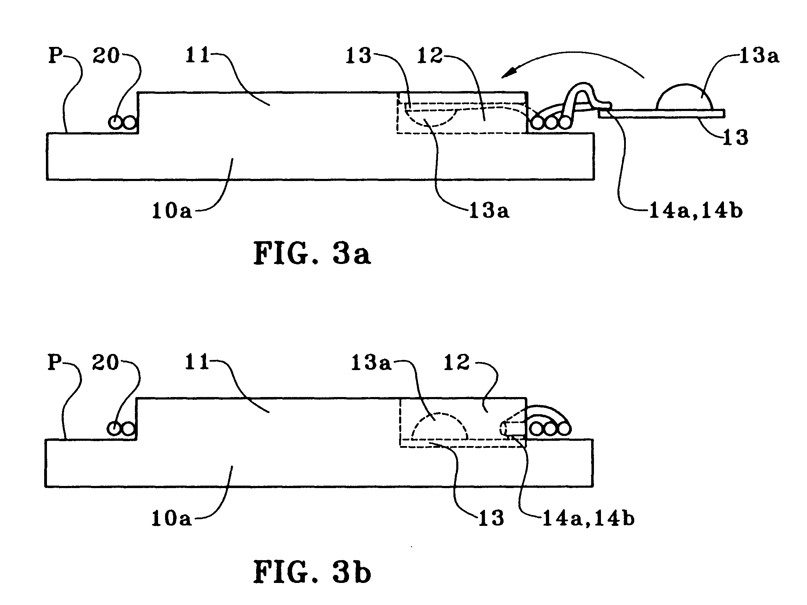

La figure 3a illustre le cas où le circuit imprimé 13 est monté après bobinage de l'antenne. Les extrémités du fil 20 sont soudées sur les plages 14a, 14b de connexion du circuit imprimé en dehors du demi-corps 10a de carte, puis le circuit 13 est replié dans la cavité 12, les composants 13a étant en-dessous et la boucle de fil 20 ainsi créée venant se loger dans la cavité 12.

Si, comme le montre la figure 3b, le circuit imprimé est monté dans la cavité 12 avant bobinage de l'antenne, une première extrémité du fil 20 est d'abord soudée sur une première plage 14a de connexion du circuit imprimé 13. Puis, on bobine l'antenne autour du noyau 11, conformément au procédé de l'invention. La deuxième extrémité du fil 20 est alors soudée sur la deuxième plage 14b de connexion du circuit imprimé 13. Le fil 20 peut être choisi de type auto-dénudant de façon à faciliter la liaison avec le circuit imprimé 13 accueillant les autres composants 13a de la carte. Contrairement à l'exemple de la figure 3a, le circuit imprimé 13 est alors au fond de la cavité 12. On a intérêt dans ce cas à utiliser un circuit imprimé à pistes argentées afin de pouvoir souder sans difficulté sur le même circuit les extrémités du fil 20 d'antenne et les connexions des composants électroniques.

Le fil 20 peut de plus être classiquement de type thermo-adhérent. Une courte mise sous tension de l'antenne ou un passage en étuve permet alors de solidariser l'antenne avec le deuxième demi-corps 10a de carte. Le choc électrique est effectué avant la soudure de la deuxième extrémité du fil 20 pour ne pas détériorer les composants 13a montés sur le circuit imprimé 13.

Pour les diamètres de fil importants, supérieurs à 0,25mm, il peut être délicat, voire même impossible, de ramener le brin de la spire extérieure sur la spire intérieure tant en respectant l'épaisseur de 0,76 mm de la carte.

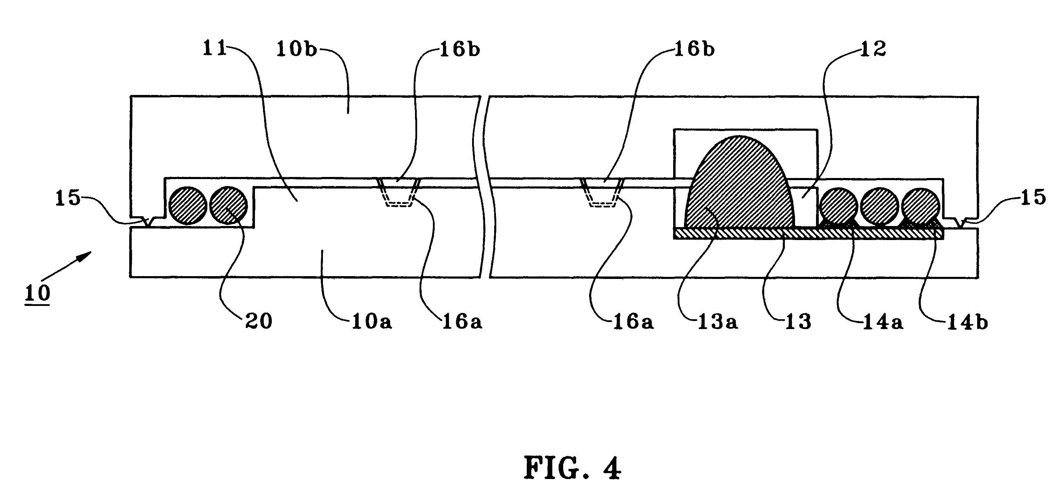

Il y aura alors avantage à utiliser la configuration illustrée sur la figure 4 qui consiste à faire déboucher la cavité 12 de manière à ce que le circuit imprimé 13 de faible épaisseur, 0,1 mm par exemple, passe sous les spires du bobinage. On soude donc les extrémités du fil 20 sur les plages 14a, 14b de connexion à l'extérieur de la cavité 12. Une piste du circuit 13 se charge de faire la liaison avec les autres composants électroniques 13a. Cette piste est courte et peut être large, ce qui permet malgré sa faible épaisseur de ne pas faire chuter le facteur de qualité de bobinage.

Après bobinage de l'antenne, montage du circuit imprimé et soudage de l'antenne sur le circuit, le deuxième demi-corps 10b de carte peut alors être rapporté pour former la carte 10. L'assemblage des premier et deuxième demi-corps de carte est réalisé par collage ou par ultra-sons. Dans ce dernier cas, on aura pris soin d'inclure un concentrateur 15 d'énergie à la périphérie du deuxième demi-corps 10b de carte, par exemple.

Pour assurer un bon positionnement des deux demi-corps 10a, 10b l'un par rapport à l'autre, des pions 16b de centrage et des trous borgnes 16a aptes à recevoir lesdits pions de centrage seront prévus lors du moulage des demi-corps de carte. Ces pions 16b peuvent éventuellement être conçus pour permettre un assemblage des demi-corps 10a, 10b par clipsage des pions dans les trous borgnes 16a.

On a représenté sur la figure 4 et les suivantes des bobinages avec des fils de fort diamètre sur un seul plan, ceci afin de bien montrer que, même dans ce cas, il était possible d'obtenir des épaisseurs de carte respectant la norme ISO 7816. Bien entendu, les principes du procédé décrit restent valables pour des bobinages réalisés avec des fils de faible diamètre sur plusieurs couches. La mise en oeuvre est alors plus aisée car on peut ramener le brin de la spire extérieure vers l'intérieur sans précaution particulière.

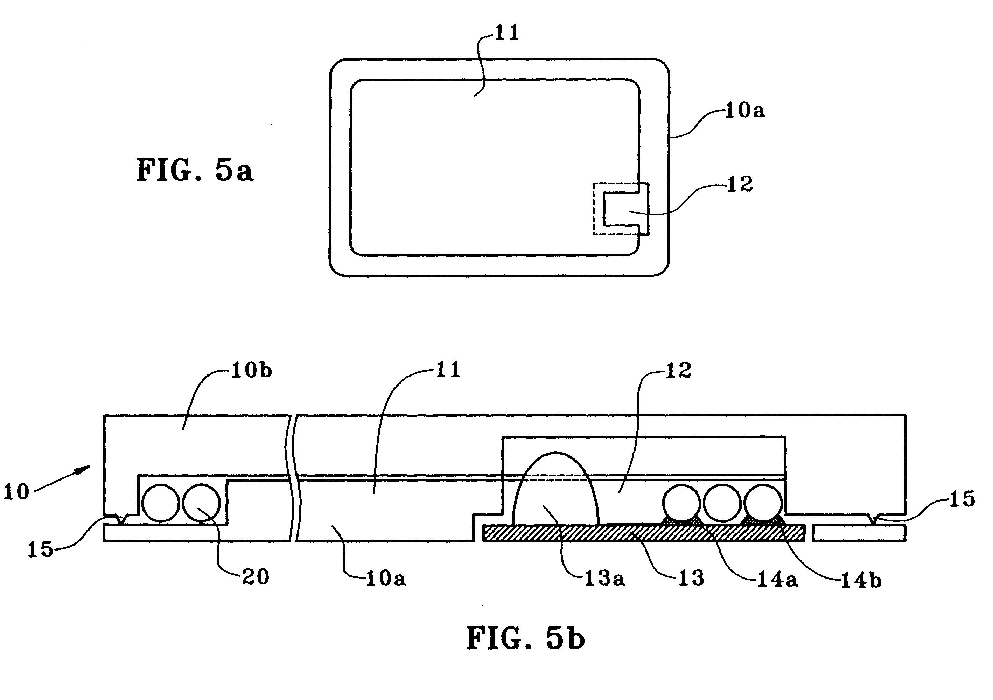

La carte 10 de la figure 4 est une carte à antenne sans contact en ce sens qu'elle n'est pas destinée à être introduite dans un lecteur quelconque. Les figures 5a et 5b illustrent au contraire le cas d'une carte à antenne avec contact extérieur. Dans cet exemple de réalisation, la cavité 12 débouche à l'extérieur du premier demi-corps 10a de carte. Le circuit 13 portant les composants 13a est muni de plages de contact extérieures selon des techniques bien connues dans le domaine des cartes à mémoire électronique. Après montage du circuit 13 ainsi équipé à l'intérieur de la cavité 12, le bobinage du fil 20 d'antenne est effectué puis le deuxième demi-corps 10b de carte est assemblé avec le premier demi-corps 10a de la même manière que pour la carte sans contact de la figure 4.

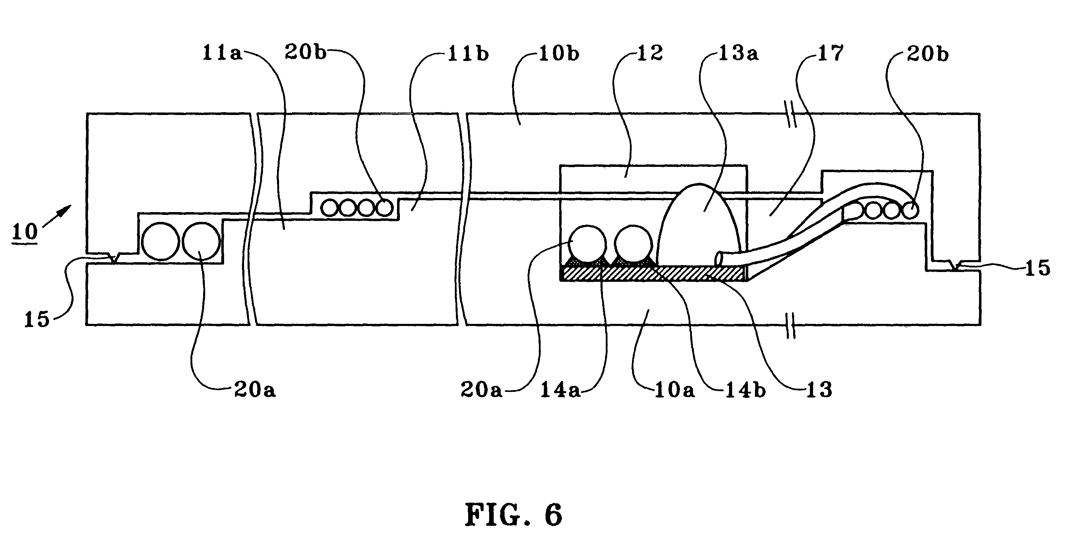

On peut être amené également à vouloir réaliser deux antennes superposées dont une partie des surfaces intérieures sont en regard l'une de l'autre, par exemple pour assurer le couplage mutuel entre les deux antennes. La figure 6 montre comment l'invention s'applique à ce mode de réalisation particulier.

Le circuit 13 fonctionne à deux fréquences différentes. L'antenne dédiée à la fréquence haute est réalisée en premier par bobinage du fil 20a autour du noyau 11a. Puis, la même opération est effectuée pour l'antenne basse fréquence à l'aide du fil 20b de diamètre plus faible, bobiné autour du noyau 11b sur un nombre de tours plus grand. Cette antenne basse fréquence est connectée au circuit intégré 13 à travers un passage 17 reliant la cavité 12 à la périphérie du noyau 11b. Le circuit 13 est monté en premier, mais pourrait être monté à la fin, dans le sens contraire.

## Revendications

1. Procédé de réalisation d'un objet portatif (10) en forme de carte et comportant au moins une antenne bobinée, **caractérisé en ce que** ledit procédé comprend les étapes suivantes :
- réalisation d'un premier (10a) et d'un deuxième (10b) demi-corps de carte, ledit premier demi-corps (10a) de carte présentant un noyau (11) au gabarit de ladite antenne,
- bobinage direct de l'antenne autour du noyau (11) du premier demi-corps (10a) de carte,
- assemblage des deux demi-corps (10a, 10b) de carte.

2. Procédé selon la revendication 1, **caractérisé en ce que** lesdits premier (10a) et deuxième (10b) demi-corps de carte sont réalisés par moulage.

3. Procédé selon la revendication 2, **caractérisé en ce que** lesdits premier (10a) et deuxième (10b) demi-corps de carte comportent des pions (16b) de centrage et des trous borgnes (16a) aptes à recevoir lesdits pions (16b) de centrage.

4. Procédé selon la revendication 3, **caractérisé en ce que** les premier (10a) et deuxième (10b) demi-corps de carte sont assemblés par clipsage des pions (16b) de centrage dans lesdits trous borgnes (16a).

5. Procédé selon l'une quelconque des revendications 1 à 3, **caractérisé en ce que** les premier (10a) et deuxième (10b) demi-corps de carte sont assemblés par collage.

6. Procédé selon l'une quelconque des revendications 1 à 3, **caractérisé en ce que** les premier (10a) et deuxième (10b) demi-corps de carte sont assemblés par ultrasons.

7. Procédé selon l'une quelconque des revendications 1 à 6, **caractérisé en ce que** ledit procédé comprend également une étape de montage d'un circuit imprimé (13) à l'intérieur d'une cavité (12) aménagée dans le premier (10a) demi-corps de carte, chaque extrémité de l'antenne étant reliée à une plage (14a, 14b) de connexion dudit circuit imprimé.

8. Procédé selon la revendication 7, **caractérisé en ce que** le circuit imprimé (13) est monté à l'intérieur de ladite cavité (12) après bobinage, les extrémités de l'antenne étant reliées simultanément auxdites plages (14a, 14b) de connexion.

9. Procédé selon la revendication 7, **caractérisé en ce que** le circuit imprimé (13) est monté à l'intérieur de ladite cavité (12) avant bobinage, une première extrémité de l'antenne étant reliée à une première plage (14a) de connexion avant bobinage et une deuxième extrémité de l'antenne étant reliée à une deuxième plage (14b) de connexion après bobinage.

10. Procédé selon l'une quelconque des revendications 1 à 9, **caractérisé en ce que** ladite antenne est réalisée en fil (20) thermo-adhérent.

## Patentansprüche

1. Verfahren zur Realisierung eines Trägerobjekts (10) in Kartenform und umfassend wenigstens eine gespulte Antenne, **dadurch gekennzeichnet, daß** besagtes Verfahren die nachfolgenden Schritte umfaßt:
- Realisierung eines ersten (10a) und eines zweiten (10b) Kartenhalbkörpers, wobei besagter erster Kartenhalbkörper (10a) einen Kern (11) in der Größe besagter Antenne aufweist,
- Direkte Spulung der Antenne um den Kern (11) des ersten Kartenhalbkörpers (10a)
- Zusammenfügen der zwei Kartenhalbkörper (10a, 10b).

2. Verfahren gemäß Anspruch 1, **dadurch gekennzeichnet, daß** besagte erste (10a) und zweite (10b) Kartenhalbkörper durch Einspritzen realisiert werden.

3. Verfahren gemäß Anspruch 2, **dadurch gekennzeichnet, daß** besagte erste (10a) und zweite (10b) Kartenhalbkörper Zentrierungspions (16b) und blinde Löcher (16a) umfassen, die geeignet sind, besagte Zentrierungspions (16b) aufzunehmen.

4. Verfahren gemäß Anspruch 3, **dadurch gekennzeichnet, daß** die ersten (10a) und zweiten (10b) Kartenhalbkörper durch Verklippen der Zentrierungspions (16b) in besagten blinden Löchern (16a) zusammengefügt werden.

5. Verfahren gemäß Anspruch 1 bis 3, **dadurch gekennzeichnet, daß** die ersten (10a) und zweiten (10b) Kartenhalbkörper durch Verkleben zusammengefügt werden.

6. Verfahren gemäß Anspruch 1 bis 3, **dadurch gekennzeichnet, daß** die ersten (10a) und zweiten (10b) Kartenhalbkörper durch Ultraschall zusammengefügt werden.

7. Verfahren gemäß Anspruch 1 bis 6, **dadurch gekennzeichnet, daß** besagtes Verfahren ebenfalls eine Stufe zum Zusammenfügen einer gedruckten Schaltung (13) im Innern einer im ersten (10a) Kartenhalbkörper angeordneten Aussparung (12) umfaßt, wobei jedes äußere Antennenende an eine Anschlußzone (14a, 14b) besagter gedruckter Schaltung angeschlossen ist.

8. Verfahren gemäß Anspruch 7, **dadurch gekennzeichnet, daß** die gedruckte Schaltung (13) nach der Spulung im Innern besagter Aussparung (12) eingebaut ist, wobei die äußeren Antennenenden gleichzeitig an besagte Anschlußzonen (14a, 14b) angeschlossen sind.

9. Verfahren gemäß Anspruch 7, **dadurch gekennzeichnet, daß** besagte gedruckte Schaltung (13) vor der Spulung im Innern besagter Aussparung (12) eingebaut ist, wobei ein erstes äußeres Antennenende an eine erste Anschlußzone (14a) vor der Spulung und ein zweites äußeres Antennenende an eine zweite Anschlußzone (14b) nach der Spulung angeschlossen ist.

10. Verfahren gemäß Anspruch 1 bis 9, **dadurch gekennzeichnet, daß** besagte Antenne aus thermohaftendem Draht (20) realisiert ist.

## Claims

1. A method of making a portable object (10) in the form of a card and including at least one antenna coil, the method being **characterized in that** it comprises the following steps:
ù making first and second card half-bodies (10a, 10b), said first card half-body (10a) having a core (11) of the size of said antenna;
ù directly winding the antenna around the core (11) of the first card half-body (10a); and
ù assembling the two card half-bodies (10a, 10b) together.

2. A method according to claim 1, **characterized in that** said first and second card half-bodies (10a, 10b) are made by molding.

3. A method according to claim 2, **characterized in that** said first and second card half-bodies (10a, 10b) include centering studs (16b) and blind holes (16a) suitable for receiving said centering studs (16b).

4. A method according to claim 3, **characterized in that** the first and second card half-bodies (10a, 10b) are assembled together by the centering studs (16b) snap-fastening in said blind holes (16a).

5. A method according to any one of claims 1 to 3, **characterized in that** the first and second card half-bodies (10a, 10b) are assembled together by adhesive.

6. A method according to any one of claims 1 to 3, **characterized in that** the first and second card half-bodies (10a, 10b) are assembled together by ultrasound welding.

7. A method according to any one of claims 1 to 6, **characterized in that** said method also includes a step of mounting a printed circuit (13) inside a cavity (12) provided in the first card half-body (10a), each end of the antenna being connected to a connection pad (14a, 14b) of said printed circuit.

8. A method according to claim 7, **characterized in that** the printed circuit (13) is mounted inside said cavity (12) after the coil has been wound, the ends of the antenna being connected simultaneously to said connection pads (14a, 14b).

9. A method according to claim 7, **characterized in that** the printed circuit (13) is mounted inside said cavity (12) before the coil is wound, a first end of the antenna being connected to a first connection pad (14a) before the coil is wound and a second end of the antenna being connected to a second contact pad (14b) after the coil has been wound.

10. A method according to any one of claims 1 to 9, **characterized in that** said antenna is made of a thermoadhesive wire (20).
